Europäisches Patentamt

(19) European Patent Office

Office européen des brevets

(11) Publication number: **0 084 686 B2**

(12) **NEW EUROPEAN PATENT SPECIFICATION**

(45) Date of publication of the new patent specification : **07.08.91 Bulletin 91/32**

(21) Application number : **82200631.8**

(22) Date of filing : **24.05.82**

(51) Int. Cl.⁵ : **B64C 39/12**

(54) **Improved aircraft.**

(30) Priority : **25.01.82 IT 1927582**

(43) Date of publication of application : **03.08.83 Bulletin 83/31**

(45) Publication of the grant of the patent : **13.05.87 Bulletin 87/20**

(45) Mention of the opposition decision : **07.08.91 Bulletin 91/32**

(84) Designated Contracting States : **AT BE CH DE FR GB LI LU NL SE**

(56) References cited :
**EP-A- 0 033 053**
**DE-A- 1 803 132**
**DE-B- 2 328 293**
**FR-A- 1 032 665**

(56) References cited :
**FR-A- 2 254 481**
**GB-A- 1 069 781**
**US-A- 2 601 962**
**US-A- 2 747 816**
**US-A- 3 188 025**
**US-A- 3 289 975**

(73) Proprietor : **Industrie Aeronautiche e Meccaniche RINALDO Piaggio S.p.A. Via Cibrario 4 I-16154 Genova (IT)**

(72) Inventor : **Mazzoni, Alessandro Via Cibrario, 4 I-16154 Genova (IT)**

(74) Representative : **Henke, Erwin et al Ing.Barzanò & Zanardo Milano S.p.A. Via Borgonuovo, 10 I-20121 Milano (IT)**

Jouve, 18, rue Saint-Denis, 75001 PARIS

## Description

This invention relates to an aircraft having three lift surfaces.

Normally, aircraft of the three lift surface type, like that according to the preamble of claim 1 and described in EP—A—00 33 053 or FR—A—2 254 481, though having an aerodynamic efficiency theoretically greater than that of aircraft of the two lift surface type, in practice present problems due to "aerodynamic interference" between the three lift surfaces which problems can at least in part jeopardize such superiority.

In order to have an optimal "functioning" of each lift surface both from the standpoint of lift, and of resistance and of other aerodynamic parameters, it is requisite that the air flow that strikes the lift surface be as little disturbed as possible so as not to alter the laminar pattern of the fluid threads on the lift surface, and this applies particularly to the air flow which strikes the upper face of the lift surface.

In the case of three lift surface aircraft, the front lift surface can give rise to vortices and, in general, disturbance in the air flow that strikes the successive main and rear lift surfaces, just as the main lift surface can create disturbances in the air flow that strikes the successive rear lift surface, altering the aforesaid laminar pattern of the fluid threads and causing a diminution of the aero-dynamic efficiency of the aircraft.

With reference to EP—A—00 33 053, it is to be noted that the reciprocal position of the front lift surface and the rear lift surface is such that the front lift surface disturbs the air flow that strikes the rear lift surface.

With reference to FR—A—1 154 481, there is inteference, in particular, between main and rear lift surfaces.

DE-B-2 328 293 shows a watercraft with a front control surface, an intermediate lift surface and rear lift surface. The front control surface is substantially on the same plane of the intermediate lift surface and consequently aerodynamic interferences occur between these surfaces.

DE-A-1 803 132 shows an aircraft with a front, intermediate, and rear lift surfaces or wings, disposed in a scaled manner, the front wing and the rear wing being respectively disposed at the lowest and the highest position. The wing span progressively reduces from the tail point to the nose point.

Such aircraft configuration adopts artificial means for reaching a high aerodynamic efficiency.

This configuration involves structural complications and limitations of the aircraft, which reduce the aerodynamic benefits.

An object of the present invention is to obviate the aforesaid problems.

Said object is achieved by a three lift surface aircraft comprising a fuselage extending from a forward bow point to a rearward tail point, an intermediate lift surface mounted on said fuselage in an intermediate longitudinal position between the forward bow point and the rearward tail point and generally at fuselage half-height, a front lift surface and a rear lift surface mounted on said fuselage respectively forward and rearward with respect to the intermediate lift surface, the front lift surface lying at a lower level than the intermediate lift surface and the intermediate lift surface lying at a lower level than the rear lift surface, characterized in that :

– the intermediate lift surface has a substantially larger lift area than the front and rear lift surfaces and is mounted on said fuselage in such a position that its centre of pressure falls behind the centre of gravity of the aircraft in the direction towards said rearward tail point,

– the front lift surface is mounted on the fuselage at said forward bow point ahead of the centre of gravity,

– the rear lift surface is mounted at the top of a vertical tail assembly extending upward from the tail point of the fulelage.

In order that the features and the advantages of the present invention may be better understood the description will be reported hereinafter of an exemplary nonlimiting embodiment thereof, as illustrated in the accompanying drawings, wherein :

FIGURE 1 is a plan view of an aircraft constructed according to the present invention,

FIGURE 2 is a side elevational view of the aircraft of Figure 1,

FIGURE 3 is a front view of the aircraft made according to Figure 1, and

FIGURE 4 is a side view of the aircraft of Figure 1, and, besides it, for comparison, of a conventional aircraft with two lift surfaces.

The aircraft made according to the invention is generally indicated at 10.

It is comprised of a fuselage 11, whereon there are mounted a main wing 12. a front slat 13 and a vertical tail plane 14 to which is secured, in a position near the top of the plane 14, a horizontal tail plane 15.

The aircraft 10 also comprises propelling means mounted on the wing 12, which will be described hereinafter.

The fuselage has a pure tapered outline without any discontinuity and running from the nose 16, ahead, to the tail portion 17, astern.

The main wing 12 is placed across the fuselage 11 roughly at the level of the half-height thereof and at a position about two thirds of the fuselage length starting from the nose 16, behind the centre of gravity of the aircraft 10 in the direction towards the tail portion 17. Said wing 12 is composed of a left half-wing 18 and a right half-wing 19, which are connected together so as to form, transversally, a dihedron angle -2° wide (inclined upward). On the left half-wing 18 there are mounted an aileron 20 and a flap 21 and, correspondingly, on the right half-wing 19 there are mounted an aileron 22 and a flap 23.

The front slat 13 is transversally connected in a fixed manner to the fuselage 11, ahead of the centre of gravity of the aircraft 10, in the vicinity of the nose 16, in a position lower than that of the wing 12 and with the angle of incidence wider than the angle of incidence of the main wing 12. The slat 13 has a superficial area which is narrower than one third of that of the wing 12 and is composed of a left half-slat 24 and a right half-slat 25, which are symmetrical relative to the central axis of the aircraft 10 and are connected together so as to form, transversally, a dihedron angle of -5° (inclined downward). On the left half-slat 24 there is installed a flap 26 and, correspondingly, a flap 27 is mounted on the right half-slat 25.

The vertical tail plane 14 is connected to the rear end of the fuselage 11. It comprises a rudder 28 and directional adjustment tabs 29.

The horizontal tail plane 15 is thus arranged at a position which is at a level higher than that of the wing 12 and has a superficial area which is less than one third that of the area of the main wing 12. Said plane 15 is composed of a left half-plane 30 and a right half-plane 31, which are symmetrical relative to the central axis of the aircraft 10 and are rigidly connected together so as to form a negative dihedron angle (inclined downward). On the left half-plane 30 an elevator 32 is installed, and, correspondingly, an elevator 33 is installed on the right half-plane 31.

The propelling motive means are formed by two turbopropeller units 34, one of which is mounted on the left half-wing 18 and the other on the right half-wing 19 in positions which are symmetrical relative to the centre line of the aircraft 10.

Each of the units 34 comprises a turbine engine 35 with a front air intake 36 and exhaust tubes at the rear, said engine driving a thrust propeller 38, that is, a propeller which is positioned behind the trailing edge of the half-wing, with its axis on a plane which is parallel to the plane of symmetry of the aircraft 10.

The aircraft 10 rests on the ground on a central front landing gear (39), which is retractable in flight and on two landing gears 40, which are placed at the rear and laterally and are also retractable in flight.

Said aircraft is especially suitable for the medium-range transportation of some ten passengers and the entire passenger compartment within the fuselage 11 is positioned ahead of the main wing 12.

The aircraft 10, as described and illustrated herein, thus exploits three lift surfaces, that is, the wing 12, the tab 13 and the horizontal tail plane 15, to obtain the aerodynamic support and the equilibrium of the forces which are active, as it is necessary during all the stages of the flight.

The main wing 12 generates the predominant fraction of the aerodynamic lift which is required in flight.

The front tab 13 contributes to the lift and the equilibrium of the aircraft.

The horizontal tail plane 15 contributes to the stability and the equilibrium of the aircraft and fulfils a task of longitudinal control and/or trimming by the rotation of the elevators 32 and 33.

The vertical tail plane 14, instead, provides both the stability and the directional control.

The three lift surfaces permit to redress the defects in the stability and the longitudinal control of the "canard" configuration, but without resorting to artificial means for increasing the lift by adopting a power increase and/or artificial means for improving the stability.

The reason therefor is the availability of an additional degree of freedom, as provided by the third lift surface, so as to fulfil at the same time the stability and manoeuverability requirements.

As a matter of fact, the configuration having three lift surfaces makes it possible to determine, for each position of the centre of gravity, a distribution of areas among the three surfaces such as to be able to exploit the contribution of the aerodynamic forces directed upward with a view to balancing the aircraft, while concurrently fulfilling the stability conditions.

In addition, if the function of controlling the longitudinal equilibrium is entrusted to the rear lift surface (tail plane 15), the stall of the aircraft does not reduce the power of the elevators.

The configuration, as described herein, having three lift surfaces, concurrently provides the potential favourable features for the "canard" configuration, as compared with the conventional one.

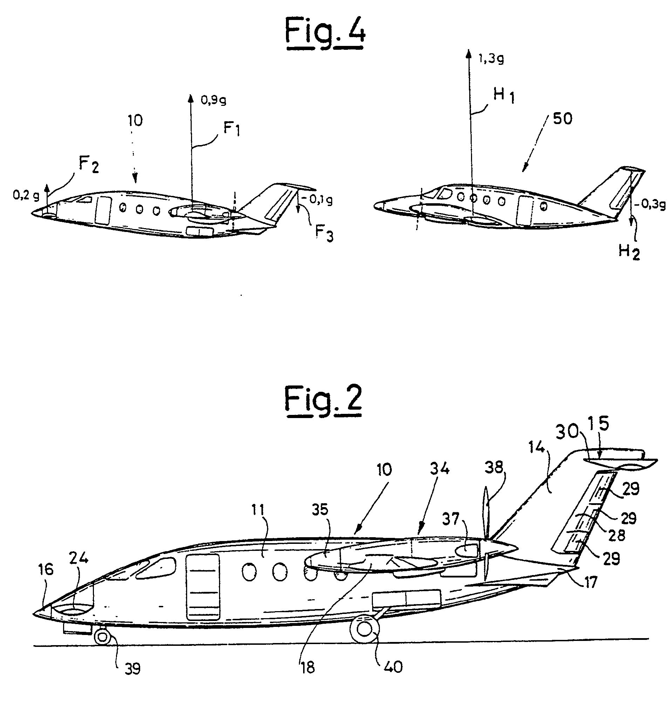

To give an evidence of this fact, Figure 4 shows the aerodynamic forces, represented by the vectors $F_1$, $F_2$, $F_3$, acting upon the aircraft 10 having three lift surfaces, in comparison with the aerodynamic forces, as represented by the vectors $H_1$, $H_2$, which are activated upon a conventional aircraft 50 of the same class but with two lift surfaces only, in the flight condition which is characterized by the angle of stall incidence for which the vectors have the following modules : $F_1 = 0.9$ g ; $F_2 = 0.2$ g ; $F_3 = -0.1$ g ; $H_1 = 1.3$ g ; $H_2 = -0.3$ g.

In this flight condition, both the configurations must provide the maximum possible lift, so as to reduce the lift surface which is required to obtain the desired stall speed. A reduction of the lift surface will originate, in fact, an increase of the efficiency at the cruising speed.

The ratio of the lift surface which is required for the aircraft 10 according to the invention, to the surface which is required for the conventional aircraft 50 is equal to the ratio of the sum of the magnitudes of the forces $F_1$, $F_2$, $F_3$ to the sum of the forces (in terms of magnitudes) $H_1$ and $H_2$.

From the comparison of the two configurations shown in Figure 4, one obtains for the aircraft 10 a saving of the overall required lift surface as great as 25% over the conventional aircraft 50.

The particular "stepwise" arrangement of the aforesaid lift surface, i.e. the main lift surface 12 at the half-height of the aircraft fuselage, the front lift surface 13 at a low level beneath the fuselage half-height, and the rear lift surface 15 at the top of the vertical tail assembly 14, confers high aerodynamic efficiency to the aircraft 10.

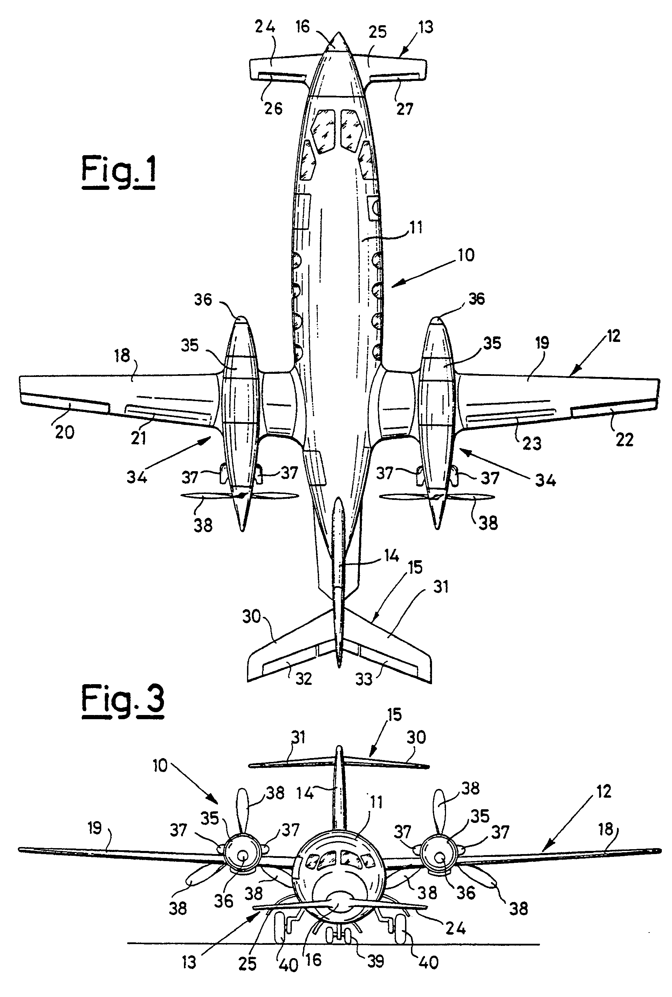

In effect, and as can be deduced from Figures 2 and 3 of the drawings, with this "stepwise" arrangement none of the lift surfaces in any substantial way disturbs the air flow that strikes the successive lift surface or surfaces, and even less the flow that strikes the upper part of the successive lift surface or surfaces, inasmuch as the preceding lift surface is always arranged lower than the following one.

In this way the problems mentioned in the introduction of the present specification are solved.

By virtue of the use of the three lift surfaces, one exploits the benefits, both from the aerodynamic standpoint and from the viewpoint of the structural characteristics, which are originated by the midway positioning of the wing 12 as to its level relative to the fuselage 11, without having to suffer from reductions of the fuselage volume reserved for the payload.

On account of the positioning of the wing 12 relative to the fuselage 11, the main sources of noise, that is, the turbopropeller units 34, are in a position which is shifted backwards relative to the passenger compartment of the fuselage 11, so as to improve the comfort in said compartment.

A useful compartment volume becomes thus available, which is wider than that provided by the contemporary aircraft of the same class, while having aerodynamic efficiencies which are positively improved over those afforded by the present aircraft having two lift surfaces.

In addition to the aerodynamic advantages, an important aspect of the configuration with three lift surfaces is. the possibility, which cannot be afforded by the configurations having two lift surfaces, of being able to design the general architecture of the aircraft without the typical requirement of a predetermined position of the centre of gravity. This fact opens the way to more rational architectural designs, with a consequent substantial reductions of the weight, and of the aerodynamic resistance, so that the dimensions of the machine can further be reduced.

Finally, the aircraft 10 is smaller, lighter and aerodynamically more efficient than the aircraft of the same class as available today.

It is obvious that the present exemplary embodiment does not set any limitations to possible modifications and/or additions.

The idea of the three lift surfaces disposed in the mentioned "stepwise" arrangement can be applied to aircraft having dimensions and tasks other than those described herein, while obtaining the same advantages.

Geometrical variations of the shape, the dimensions, both absolute and relative, of the three lift surfaces, can be introduced to optimize the configuration for the operative requirements of the individual aircraft, since what has been shown in the accompanying drawings has been originated solely by the particular class of aircraft described herein.

In addition, at least one portion of the surface of the tab 13 can be rotated about an axis normal to the vertical plane of symmetry of the fuselage thus contributing towards the functions of longitudinal control and/or trimming. Lastly, it can be movable relative to the fuselage, or the two half-tabs 24 and 25 can effect rotations relative to one another.

At least one portion of the entire surface of the horizontal tail plane 15 can also be rotated about an axis normal to the vertical plane of symmetry of the fuselage.

In connection with the motorized propelling means, one may provide two turbopropeller units arranged like the units 34, but with pulling propellers placed ahead of the main wing.

As a rule, it is possible to adopt propelling means consisting of conventional propellers, or turbo-jets, mounted on the fuselage ahead or astern, or in an intermediate position, or also mounted on the wings. In the case of conventional propellers, it can be envisaged to place the engines in the fuselage and the propellers on the wings, by connecting the latter to the engines by means of adequate linkages.

Lastly, there is to be added that the approach suggesting three lift surfaces disposed in the mentioned "stepwise" arrangement can be adopted also on aircraft having no propelling means of their own, such as the gliders.

## Claims

1. A three lift surface aircraft comprising a fuselage (11) extending from a forward bow point (16) to a rearward tail point (17), an intermediate lift surface (12) mounted on said fuselage (11) in an intermediate longitudinal position between the forward bow point (16) and the rearward tail point (17) and generally at fuselage half-height, a front lift surface (13) and a rear lift surface (15) mounted on said fuselage (11) respectively forward and rearward with respect to the intermediate lift surface (12), the front lift surface (13) lying at a lower level than the intermediate lift surface and the intermediate lift surface lying at a lower level than the rear lift surface, characterized in that :

  – the intermediate lift surface (12) has a substantially larger lift area than the front and rear lift surfaces (13,15) and is mounted on said fuselage (11) in such a position that its centre of pressure falls behind the centre of gravity of the aircraft in the direction towards said rearward tail point (17),
– the front lift surface (13) is mounted on the fuselage (11) at said forward bow point (16) ahead of the centre of gravity,
– the rear lift surface (15) is mounted at the top of a vertical tail assembly (14) extending upward from the tail point (17) of the fuselage (11).

2. Aircraft according to claim 1, wherein said intermediate lift surface forms a transverse positive dihedron and said front lift surface forms a transverse negative dihedron.

3. Aircraft according to claim 1 or 2, wherein said intermediate lift surface (12) is provided with ailerons (20, 22) and flaps (21, 23), said front lift surface (13) is provided with flaps (26, 27), said rear lift surface is provided with elevators (32, 33), and said vertical tail assembly (14) is provided with a rudder (28).

4. Aircraft according to one of the preceding claims, wherein said front lift surface (13) is rigidly connected to the fuselage (11).

5. Aircraft according to anyone of claims 1, 2, 3, wherein said front lift surface (13) is movable with respect to the fuselage (11).

6. Aircraft according to anyone of claims 1, 2 or 3, wherein at least one portion of said front lift surface (13) is rotatable about an axis normal to the vertical plane of symmetry of the fuselage (11).

7. Aircraft according to claim 6, wherein said front lift surface is split into two portions (24, 25) which can be rotated with respect to one another about an axis normal to the vertical plane of symmetry of the fuselage (11).

8. Aircraft according to anyone of claims 1, 2,3,4,6, wherein said front lift surface (13) has an angle of incidence wider than that of said intermediate lift surface (12).

9. Aircraft according to anyone of the preceding claims, provided with propelling means (34).

10. Aircraft according to claim 9, wherein said propelling means (34) comprise conventional propellers (38).

11. Aircraft according to claims 9 or 10, werein said propelling means (34) are mounted on said intermediate lift surface (12).

12. Aircraft according to claim 11, wherein said propelling means (34) are composed of turbo-propeller units having their propellers (38) arranged behind said main lift surface (12).

13. Aircraft according to claim 10, wherein said propelling means comprise motive members arranged in said fuselage and propellers mounted on said intermediate lift surface, and mechanically connected to said motive members..

14. Aircraft according to claim 9, wherein said propelling means are turbo-jet means.

15. Aircraft according to claim 1, comprising in combination :
– said fuselage (11) having a minimum aerodynamic resistance and the external outline of which is absolutely devoid of any curvature discontinuities,
– a main wing (12) constituting said intermediate lift surface, equipped with wing flaps (21,23) and ailerons (20,22), and forming a transverse positive dihedron,
– a front tab (13) constituting said front lift surface, rigidly connected to the front end of said fuselage (11) and having an area less than one third of the area of said main wing (12), composed of two symmetrical half-tabs (24, 25) relative to the centre line of the aircraft and rigidly connected together so as to form a transverse negative dihedron positioned beneath the plane of said main wing (12), said front tab (13) being equipped with wing flaps (26,27),
– a vertical tail plane (14),constituting said vertical tail assembly, equipped with a rudder (28), installed behind said main wing (12),
– a horizontal tail plane (15) constituting said rear lift surface having an area less than one third of the area of said main wing (12), consisting of two half-planes (30, 31) which are symmetrical relative to the centre line of the aircraft and are connected rigidly together so as to form a transverse negative dihedron mounted in elevation on said vertical tail plane, said horizontal tail plane (15) being equipped with elevators (32, 33),
– two turbo-propeller engines (34) which drive propellers (38) positioned behind said main wing (12), installed on said wing in a position symmetrical relative to the middle plane of the aircraft,
– a passenger compartment placed in said fuselage (11) ahead of said main wing (12),
– a front landing gear (39) which can fully be retracted within the fuselage (11), and
– two main rear landing gears (40) which can completely be retracted within said fuselage (11) behind the passenger compartment thereof.

## Revendications

1. Avion à trois surfaces portantes, comprenant un fuselage (11) s'étendant d'un point de nez avant (16) à un point de queue arrière (17), une surface portante intermédiaire (12) montée sur ledit fuselage (11) à une position longitudinale intermédiaire entre le point de nez avant (16) et le point de queue arrière (17) et globalement à mi-hauteur du fuselage, une surface portante avant (13) et une surface portante arrière (15) montées sur ledit fuselage (11) respectivement en avant et en arrière de la surface portante intermédiaire (12), la surface portante avant (13) se situant à un niveau plus bas que la surface portante intermédiaire et la surface portante intermédiaire se situant à un niveau plus bas que la surface portante arrière, caractérisé en ce que :

    – la surface portante intermdiaire (12) possède une aire portante sensiblement supérieure à celles des surfaces portantes avant et arrière (13, 15) et est montée sur le fuselage (11) dans une position telle que son centre de pression se trouve en arrière du centre de gravité de l'avion, vers ledit point de queue arrière (17),

    – la surface portante avant (13) est montée sur le, fuselage (11) vers ledit point de nez avant (16), en avant du centre de gravité de l'avion,

    – la surface portante arrière (15) est montée au sommet d'un empennage vertical (14) s'étendant vers le haut à partir du point de queue (17) du fuselage (11).

2. Avion selon la revendication 1, dans lequel la surface portante intermédiaire forme un dièdre positif transversal et la surface portante avant forme un dièdre négatif transversal.

3. Avion selon la revendication 1 ou 2, dans lequel la surface portante intermédiaire (12) est munie d'ailerons (20,22) et de volets hypersustentateurs (21,23), la surface portante avant (13) est munie de volets hypersustentateurs (26,27), la surface portante arrière est munie de gouvernes de profondeur (32,33), et l'empennage vertical (14) est muni d'un gouvernail (28).

4. Avion selon l'une des revendications précédentes, dans lequel la surface portante avant (13) est assemblée rigidement au fuselage (11).

5. Avion selon l'une quelconque des revendications 1, 2 et 3, dans lequel la surface portante avant (13) est mobile par rapport au fuselage (11).

6. Avion selon l'une quelconque des revendications 1, 2 ou 3, dans lequel au moins une partie de la surface portante avant (13) peut être tournée autour d'un axe normal au plan de symétrie vertical du fuselage (11).

7. Avion selon la revendication 6, dans lequel la surface portante avant est divisée en deux parties (24,25) qui peuvent être tournées l'une par rapport à l'autre autour d'un axe normal au plan de symétrie vertical du fuselage (11).

8. Avion selon l'une quelconque des revendications 1, 2, 3, 4, 6, dans lequel la surface portante avant (13) a un angle d'incidence supérieur à celui de la surface portante intermédiaire (12).

9. Avion selon l'une quelconque des revendications précédentes, comprenant des moyens de propulsion (34).

10. Avion selon la revendication 9, dans lequel les moyens de propulsion (34) comprennent des hélices conventionnelles (38).

11. Avion selon la revendication 9 ou 10, dans lequel les moyens de propulsion (34) sont montés sur la surface portante intermédiaire (12).

12. Avion selon la revendication 11, dans lequel les moyens de propulsion (34) sont constitués par des ensembles turbopropulseurs dont les hélices (38) sont disposées en arrière de la surface portante principale (12).

13. Avion selon la revendication 10, dans lequel les moyens de propulsion comprennent des éléments moteurs disposés dans le fuselage et des hélices montées sur la surface portante intermédiaire et reliées mécaniquement auxdits éléments moteurs.

14. Avion selon la revendication 9, dans lequel les moyens de propulsion sont des turbo-réacteurs.

15. Avion selon la revendication 1, comprenant en combinaison :

    – un fuselage (11) présentant une résistance aérodynamique minimale et dont le contour externe est totalement dépourvu de toutes solutions de continuité de courbure,

    – une aile principale (12) formant ladite surface portante intermédiaire, munie de volets hypersustentateurs (21,23) et d'ailerons (20,22), et formant un dièdre positif transversal,

    – une aile avant (13) formant ladite surface portante avant, assemblée rigidement à l'extrémité avant dudit fuselage (11) et présentant une aire inférieure à un tiers de l'aire de ladite aile principale (12), constituée de deux "moustaches" (24,25) symétriques par rapport à l'axe médian de l'avion et reliées rigidement entre elles de manière à former un dièdre négatif transversal positionné en dessous du plan de ladite aile principale (12), ladite aile avant (13) étant munie de volets hypersustentateurs (26,27),

    – un empennage vertical (14), muni d'un gouvernail (28), installé en arrière de ladite aile principale (12),

    – un empennage horizontal (15) formant ladite surface portante arrière, présentant une surface inférieure à un tiers de la surface de ladite aile principale (12), et constitué de deux demi-empennages (30,31) qui sont symétriques par rapport à l'axe médian de l'avion et sont reliés rigidement entre eux de manière à former un dièdre négatif transversal monté en élévation sur ledit empennage vertical, ledit empennage horizontal (15) étant muni de gouvernes de profondeur (32,33),

    – deux turbopropulseurs (34) qui entraînent des hélices (38) positionnées en arrière de ladite aile principale (12), installés sur ladite aile dans des positions symétriques par rapport au plan médian de l'avion,

    – un compartiment passagers placé dans ledit fuselage (11) en avant de ladite aile principale (12),

    – un train d'atterrissage avant (39) qui peut être entièrement rentré dans le fuselage (11), et

    – deux trains d'atterrissage principaux arrière (40) qui peuvent être entièrement rentrés dans ledit fuselage (11), en arrière du compartiment passagers de ce dernier.

## Patentansprüche

1. Flugzeug mit drei Tragflächen und einem sich vom Bug (16) bis zum Heck (17) erstreckenden Rumpf (11), einer am Rumpf (11) in einem mittleren Längsabschnitt desselben zwischen Bug (16) und Heck (17) im wesentlichen in halber Rumpfhöhe angebrachten Zwischentragfläche (12), einer vorderen Tragfläche (13) und einer hinteren Tragfläche (15), welche am Rumpf (11) vor bzw. hinter der Zwischentragfläche (12) angebracht sind, wobei die vordere Tragfläche (13) in geringerer Höhe als die Zwischentragfläche une die Zwischentragfläche in geringerer Höhe als die hintere Tragfläche liegt, dadurch gekennzeichnet, daß
    – die Zwischentragfläche (12) eine wesentlich größere tragende Fläche als die vordere und die hintere Tragfläche (13,15) aufweist und am Rumpf (11) an einer solchen Stelle angebracht ist, daß der Auftriebsmittelpunkt der Haupttragfläche hinter dem Schwerpunkt des Flugzeuges in Richtung zum Heck (17) liegt,
    – die vordere Tragfläche (13) am Rumpf (11) am Rug (16) vor dem Schwerpunkt angebracht ist,
    – die hintere Tragfläche (15) am oberen Ende einer vertikalen Heckflossenanordnung (14) angebracht ist, welche sich vom Heck (17) des Rumpfes (11) aufwärts erstreckt.

2. Flugzeug nach Anspruch 1, wobei die Zwischentragfläche in Querrichtung einen positiven Dieder und die vordere Tragfläche in Querrichtung einen negativen Dieder ausbildet.

3. Flugzeug nach Anspruch 1 oder 2, wobei die Zwischentragfläche (12) mit Querrudern (20,22) und Klappen (21,23), die vordere Tragfläche (13) mit Klappen (26,27), die hintere Tragfläche mit Höhenrudern (32,33) und die vertikale heckflossenanordnung (14) mit einem Seitenruder (28) ausgebildet ist.

4. Flugzeug nach einem der vorangehenden Ansprüche, wobei die vordere Tragfläche (13) mit dem Rumpf (11) starr verbunden ist.

5. Flugzeug nach einem der Ansprüche 1, 2, order 3, wobei die vordere Tragfläche (13) relativ zum Rumpf (11) bewegbar ist.

6. Flugzeug nach einem der Ansprüche 1, 2, oder 3, wobei wenigstens ein Teil der vorderen Tragfläche (13) um eine auf die vertikale Symmetrieebene des Rumpfes (11) senkrechte Achse verdrehbar ist.

7. Flugzeug nach Anspruch 6, wobei die vordere Tragfläche in zwei Teile (24,25) geteilt ist, welche relativ zueinander um eine auf die vertikale Symmetrieebene des Rumpfes (11) normale Achse verdrehbar sind.

8. Flugzeug nach einem der Ansprüche 1, 2, 3, 4 order 6, wobei die vordere Tragfläche (13) einen größeren Anstellwinkel als die Zwischentragfläche (12) hat.

9. Flugzeug nach einem der vorangehenden Ansprüche, welches eine Triebwerksanlage (34) aufweist.

10. Flugzeug nach Anspruch 9, wobei die Triebwerksanlage (34) herkömmliche Propeller (38) aufweist.

11. Flugzeug nach Anspruch 9 oder 10, wobei die Triebwerke (34) an der Zwischentragfläche (12) angebracht sind.

12. Flugzeug nach Anspruch 11, wobei die Triebwerke (34) von Propeller-Turbinen-Triebwerken gebildet sind, deren Propeller (38) hinter der Zwischentragfläche (12) angeordnet sind.

13. Flugzeug nach Anspruch 10, wobei die Triebwerksanlage im Rumpf untergebrachte Antriebsvorrichtungen und an der Haupttragfläche angeordnete Propeller umfaßt, die mechanisch mit den Antriebsvorrichtungen verbunden sind.

14. Flugzeug nach Anspruch 9, wobei die Triebwerksanlage von Strahltriebwerken gebildet ist.

15. Flugzeug nach Anspruch 1, umfassend in Kombination :
    – den Rumpf (11) mit minimalem aerodynamischen Widerstand, dessen äußere Form absolut frei von Krümmungsunstetigkeiten ist,
    – einen die Zwischentragfläche bildenden Hauptflügel (12) mit Klappen (21,23) und Querrudern (20,22), welcher in Querrichtung einen positiven Dieder bildet,
    – einen die vordere Tragfläche bildenden, mit dem vorderen Ende des Rumpfes (11) starr verbundenen Vorderflügel (13), dessen Fläche kleiner als ein Drittel der Fläche des hauptflügels (12) ist und der aus zwei bezüglich der Mittelachse des Flugzeuges symmetrischen Flügelhälften (24,25) besteht, welche starr miteinander verbunden sind und in Querrichtung einen negativen Dieder bilden, der unter der Ebene des Hauptflügels (12) angeordnet ist, wobei der Vorderflügel (13) mit Klappen (26,27) ausgestattet ist,
    – eine hinter dem Hauptflügel (12) angeordnete, mit einem Seitenruder (28) ausgestattete vertikale Heckflosse (14), welche die vertikale Heckflossenanordnung ausbildet,
    – eine die hintere Tragfläche bildende horizontale Heckflosse (15), deren Fläche kleiner ist als ein Drittel der Fläche des Hauptflügels (12) und die aus zwei bezüglich der Mittelachse des Flugzeuges symmetrischen Hälften (30,31) besteht, welche starr miteinander verbunden sind und einen erhöht an der vertikalen Heckflosse angebrachten, in Querrichtung negativen Dieder bilden, wobei die horizontale Heckflosse (15) mit Höhenrudern (32,33) ausgestattet ist,
    – zwei bezüglich der Mittelebene des Flugzeuges symmetrisch am Hauptflügel (12) angeordnete Propeller-Turbinen-Triebwerke (34), die hinter dem Hauptflügel angeordnete Propeller (38) antreiben,

– ein im Rumpf (11) vor dem Hauptflügel (12) befindliches Passagierabteil,

– ein voll in den Rumpf (11) einziehbares, vorderes Fahrwerk (39) und

– zwei hintere Hauptfahrwerke (40), die hinter dem Passagierabteil voll in den Rumpf (11) einziehbar sind.

Fig.1

Fig.3

# Fig.4

0,9g

10

F₁

F₂

0,2 g

-0,1g

F₃

1,3g

H₁

50

-0,3g

H₂

# Fig.2

30 15

14

38

29

10 34

11 35 37

29
28
29

16 24

17

39

18

40